# EUROPÄISCHE PATENTSCHRIFT

(11) **EP 1 924 768 B1**
(45) Veröffentlichungstag und Bekanntmachung des Hinweises auf die Patenterteilung: **18.02.2009**
(21) Anmeldenummer: 06792695.6
(22) Anmeldetag: 04.08.2006
(51) Int. Cl.: F02M 25/08

(54) **VERFAHREN ZUM BETRIEB EINER EINEN TANK AUFWEISENDEN TANKANLAGE UND TANKANLAGE**
METHOD FOR OPERATING A TANK SYSTEM COMPRISING A TANK, AND TANK SYSTEM
PROCEDE DE FONCTIONNEMENT D'UNE INSTALLATION RESERVOIR POSSEDANT UN RESERVOIR, ET INSTALLATION RESERVOIR

(30) Priorität: 02.09.2005 DE 102005041658
(43) Veröffentlichungstag der Anmeldung: 28.05.2008
(73) Patentinhaber: ROBERT BOSCH GMBH, 70442 Stuttgart (DE)
(72) Erfinder: LEDERLE, Karl-Bernhard, 71272 Renningen (DE); PFEIL, Michael, 71701 Schwieberdingen (DE); BROSI, Silke, 74232 Abstatt (DE)
(86) Internationale Anmeldenummer: PCT/EP2006/065062
(87) Internationale Veröffentlichungsnummer: WO 2007/025838

(56) Entgegenhaltungen:
- DE-A1- 10 139 619
- DE-A1- 19 536 646
- DE-A1- 19 708 937
- GB-A- 2 178 107
- US-A- 5 890 474
- US-A- 6 119 663
- US-A1- 2002 153 374

## Beschreibung

Die Erfindung betrifft ein Verfahren zum Betrieb einer einen Tank aufweisenden Tankanlage insbesondere eines Kraftfahrzeugs und eine Tankanlage, welche ein Adsorptionsfilter zur Aufnahme von aus dem Tank austretenden flüchtigen Stoffen aufweist zur Durchführung des Verfahrens.

### Stand der Technik

Bei von Verbrennungsmotoren angetriebenen Kraftfahrzeugen ist für einen einwandfreien Kraftstoffnachschub eine Belüftung des Kraftstoffvorratstanks zwingend erforderlich. Bei sich verbrauchendem Kraftstoff muß Luft in den Tank nachströmen können, da sich im Tank sonst ein Vakuum bilden und der Kraftstofffluss stoppen würde. Der Tank ist aber auch zu entlüften, um dem Tankinhalt ausreichend Gelegenheit zum Ausdehnen bei Erwärmung geben zu können. Zudem muß beim Betanken genügend Luft aus dem Tank austreten können, damit der eingefüllte Kraftstoff nicht sogleich wieder aus einem am Tank vorgesehenen Einfüllrohr heraussprudelt.

In Kraftfahrzeugen werden zunehmend eine sogenannte "On-Board Refueling Vapour Recovering" (ORVR)-Funktionalität aufweisende Tankentlüftungseinrichtungen eingesetzt, bei denen verdunstender bzw. überschüssiger Kraftstoffdampf oder -gas nicht ins Freie, sondern über eine Entlüftungsleitung mit großem Querschnitt direkt in eine Vorrichtung zur Speicherung der austretenden Kohlenwasserstoffe, beispielsweise ein Aktivkohlefilter, geleitet wird. Aus dem Stand der Technik bekannte aktuelle Tanksysteme sind dabei so gestaltet, dass sich während des Betankungsvorgangs der dazu notwendige Unterdruck einstellt. Der Kraftstoffdampf wird in der Vorrichtung zur Speicherung der austretenden Kohlenwasserstoffe, beispielsweise dem Aktivkohlefilter gespeichert und im Fahrbetrieb des Kraftfahrzeugs über ein elektromagnetisches Tankentlüftungsventil einem Saugrohr des Verbrennungsmotors und damit der Verbrennung zugeführt. Hierdurch kann eine Emission der umweltschädigenden Kraftstoffdämpfe aus dem Tank in die Umgebung weitestgehend verhindert werden und zugleich die dem Verbrennungsmotor zugeführten Dämpfe selbst noch als Kraftstoff eingesetzt werden, wodurch sich auch der Kraftstoffverbrauch reduziert.

Zur Einhaltung gesetzlicher Vorschriften müssen in den Vereinigten Staaten von Amerika. Kraftfahrzeuge mit Ottomotor mit einer Einrichtung zur On-Board-Diagnose des Kraftstoffsystems ausgerüstet sein. Mit dieser Einrichtung sollen Lecks mit einem Durchmesser größer oder gleich 0,5mm erkannt werden. Um sicherzustellen, daß ein zur Betankung geöffneter Tankdeckel nicht als Leckfehler erkannt und in einen Fehlerspeicher eingetragen wird, erfolgt eine Wegstreckenentprellung mit Betankungserkennung über die Zunahme des Tankfüllstands. Ein solches Verfahren ist beispielsweise aus der DE 101 39 619 A1 bekannt. Um einen emissionsarmen Betrieb einer Tankanlage, insbesondere auch während eines Betankungsvorgangs, mit möglichst einfachen und kostengünstigen Mitteln zu ermöglichen, wird bei diesem Verfahren bei einer Betankung des Tanks der Tankfüllstand erfaßt und bei Vorliegen eines maximalen Tankfüllstandes ein Absperrventil schließend angesteuert. Hierdurch soll ein Entweichen von flüchtigen Stoffen vermieden werden. Hierfür ist jedoch die Auswertung eines Tankfüllstandssignals oder wie in der DE 195 36 646 eines zeitlichen Druckverlaufs erforderlich, das von einem Füllstandsgeber bzw. Differenzdruckgebers erzeugt wird. Da nun aufgrund der gesetzlichen Vorschriften alle Komponenten, die für eine geforderte Diagnose genutzt werden, ebenfalls auf Ihre Funktionsfähigkeit überwacht werden müssen, muß auch ein derartiger Füllstandsgeber oder Differenzdruckgebers überwacht werden.

Aufgabe der Erfindung ist es nun, ein Verfahren zum Betrieb einer einen Tank aufweisenden Tankanlage zu vermitteln, welches ohne Auswertung eines Tankfüllstandsignals einen Betankungsvorgang erkennt, der dann z.B. in der Einrichtung zur On-Board-Diagnose des Kraflstoffsystems berücksichtigt wird.

### Vorteile der Erfindung

Diese Aufgabe wird bei einem Verfahren zum Betrieb einer einen Tank aufweisenden Tankanlage insbesondere eines Kraftfahrzeugs der eingangs beschriebenen Art dadurch gelöst, daß aufgrund der Beladung des Adsorptionsfilters auf einen Betankungsvorgang geschlossen wird.

Die Aufgabe wird ferner durch eine Tankanlage insbesondere eines Kraftfahrzeugs gelöst, welche einen Tank aufweist, einen Adsorptionsfilter zur Aufnahme von aus dem Tank austretenden flüchtigen Stoffen, wobei ein Steuergerät zur Erfassung von Signalen vorgesehen ist, welche die Beladung des Adsorptionsfilters charakterisieren und aufgrund der Beladung einen Betankungsvorgang ermitteln.

Grundidee der Erfindung ist es, aus der sich bei einem Betankungsvorgang ändernden Beladung des Adsorptionsfilters auf einen Betankungsvorgang zu schließen, um so die Verwendung von Tankfüllstandsgebern hoher Präzision und die Auswertung von Tankfüllstandsignalen zu vermeiden oder, sofern Tankfüllstandsgeber existieren, diese zu ergänzen oder beispielsweise deren Funktion zu überprüfen.

Weitere Vorteile und Merkmale der Erfindung sind Gegenstand der auf Anspruch 1 rückbezogenen Unteransprüche.

So wird die Beladung vorteilhafterweise durch Spülen und Adaptieren der Beladung während jedes Fahrzyklus bestimmt und gespeichert. Auf einen Betankungsvorgang wird dabei dann geschlossen, wenn die Beladung nach einem Stillstand des Fahrzeugs um einen vorgebbaren Wert größer ist als die Beladung vor dem Stillstand des Fahrzeugs.

Bevorzugt werden zur Bestimmung der Beladung den Betriebszustand des Verbrennungsmotors der Brennkraftmaschine charakterisierende Größen und/oder die Umgebungseinflüsse charakterisierende Größen berücksichtigt, beispielsweise die Standzeit oder eine Höhenänderung oder die Außentemperatur oder die Luftfeuchtigkeit, der Luftdruck usw. Auf diese Weise kann die Genauigkeit der Bestimmung der Beladung erhöht werden.

Weitere Vorteile und Merkmale der Erfindung sind Gegenstand der nachfolgenden Beschreibung sowie der zeichnerischen Darstellung eines Ausführungsbeispiels der Erfindung.

### Zeichnung

In der Zeichnung zeigen:
- Fig. 1: schematisch eine erfindungsgemäße Tankanlage in schematischer Darstellung und
- Fig. 2: ein erfindungsgemäßes Verfahren zum Betrieb der in Fig. 1 dargestellten Tankanlage anhand eines Ablaufdiagrammes.

### Beschreibung der Ausführungsbeispiele

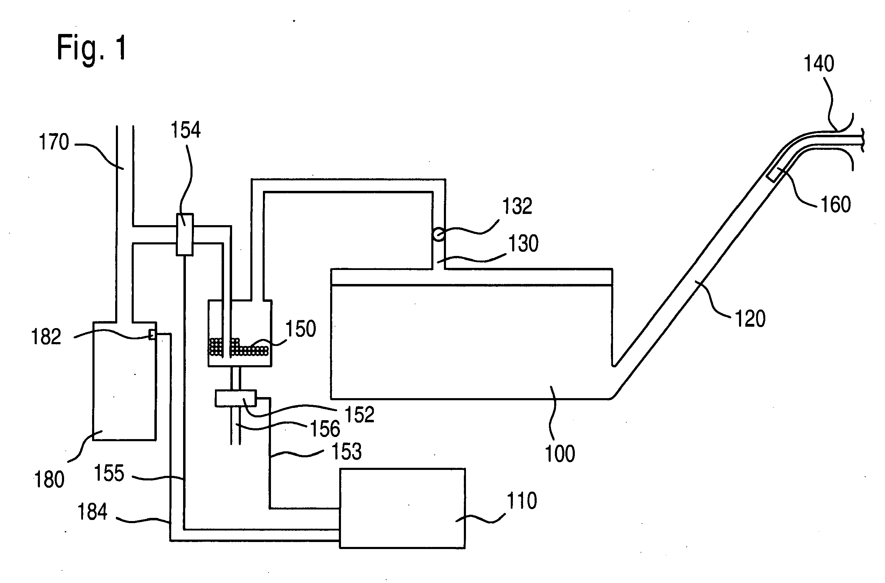

Eine in Fig. 1 gezeigte Tankanlage weist einen Kraftstofftank 100 auf, aus dem ein Einfüllrohr 120 herausführt, mit dessen Hilfe Kraftstoff in den Tank 100 eingefüllt werden kann. Im Bereich eines am oberen Ende des Einfüllrohrs 120 ausgebildeten Einfüllstutzens 140 ist eine eingeführte Zapfpistole 160 angedeutet. Im oberen Bereich des Tanks 100 führt aus diesem eine Entlüftungsleitung 130 heraus, die in eine Vorrichtung zum Adsorbieren und Speichern von Kraftstoffen, beispielsweise in einen Aktivkohlefilter mündet. Verdunstender Kraftstoff wird auf diese Weise dem Aktivkohlefilter 150 zugeführt. Insbesondere beim Betanken des Tanks 100 werden sich etwa bildende Kraftstoffdämpfe in das Aktivkohlefilter 150 geleitet und dort aufgefangen.

Das Aktivkohlefilter 150 wird im Fahrbetrieb des Fahrzeugs mittels eines Tankentlüftungsventils 154, das über eine Steuerleitung 155 von einem Steuergerät 110 angesteuert wird, zeitweilig von dem bis dahin adsorbierten Kraftstoffdampf regeneriert, indem dieser Kraftstoffdampf in einen Ansaugtrakt 170 einer Brennkraftmaschine 180 geleitet wird. In diesem Falle wird ein Absperrventil 152 über eine Steuerleitung 153 öffnend geschaltet, so daß Luft über eine Belüftungsleitung 156 in das Aktivkohlefilter 150 strömt.

In der Entlüftungsleitung 130 ist ferner wenig oberhalb des Tanks 100 aus Sicherheitserwägungen bevorzugt noch ein mechanisch ausgebildetes Rollover-Ventil (ROV) 132 angeordnet. Dieses dient dazu, die Entlüftungsleitung 130 im Falle des Umstürzens des Fahrzeugs zu schließen, um dadurch den ungehinderten Austritt von Kraftstoff in das Adsorptionsfilter 150 zu verhindern. Es ist ferner zu bemerken, daß das Absperrventil 152 auch für eine an sich bekannte und beispielsweise aus der US 5,890,474 hervorgehende und dort ausführlich beschriebene Dichtheitsprüfung des Tanks schließend angesteuert werden kann.

An der Brennkraftmaschine 180 sind ferner Sensoren 182 angedeutet, welche stellvertretend für die Erfassung von Steuergrößen der Brennkraftmaschine 180, beispielsweise des Kraftstoffluftgemischs und dergleichen stehen und die über eine Signalleitung 184 ebenfalls dem Steuergerät 110 zugeführt werden.

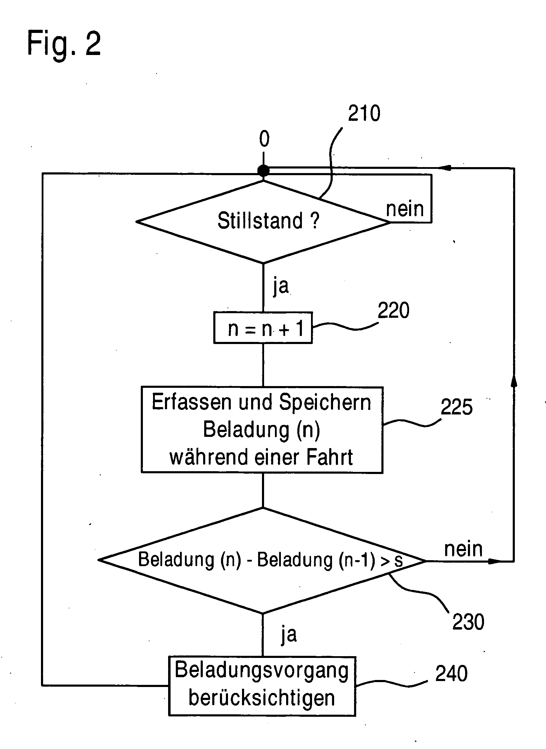

Die Erfassung eines Betankungsvorgangs wird nun nachfolgend in Verbindung mit Fig. 2 näher beschrieben.

In einem Schritt 210 wird zunächst geprüft, ob ein Stillstand des Fahrzeugs vorliegt. Wenn dies der Fall ist, wird in Schritt 220 eine Laufvariable um 1 erhöht: n = n + 1.

Sodann wird in Schritt 225 die Beladung des Aktivkohlefilters 150 während einer dem Stillstand folgenden Fahrt erfasst und gespeichert. Dies geschieht dadurch, daß durch das Steuergerät 110 über die Steuerleitungen 153 bzw. 155 die Ventile 152 bzw. 154 öffnend angesteuert werden, so daß die Beladung des Aktivkohlefilters 150 dem Saugrohr 170 der Brennkraftmaschine 180 zugeführt wird. Durch die Sensoren 182 wird die adaptierte Beladung des Adsorptionsfilters 150 ermittelt und gespeichert, wobei hier insbesondere auch Größen der Steuerung der Brennkraftmaschine 180, wie Drehzahl und dergleichen, die bekannt sind, sowie Umgebungseinflüsse, wie die Höhe über Normalnull, die Umgebungstemperatur und dergleichen zur Erhöhung der Präzision der Bestimmung der Beladung berücksichtigt werden.

In Schritt 230 wird sodann die Differenz zwischen der auf diese Weise bestimmten Beladung und der entsprechend ermittelten Beladung während einer Fahrt (n -1) vor dem Stillstand des Fahrzeugs bestimmt und diese mit einem Schwellenwert S verglichen. Ist die Differenz der Beladung der Fahrt n nach dem Stillstand vermindert um die Beladung der Fahrt (n - 1) vor dem Stillstand größer als der Schwellenwert S, wird darauf geschlossen, daß ein Betankungsvorgang vorliegt, und dieser berücksichtigt (Schritt 240). Ist dies nicht der Fall, wird vor Schritt 210 zurückgesprungen, in dem ermittelt wird, ob ein Stillstand vorliegt.

Der Vorteil des beschriebenen Verfahrens liegt darin, daß zur Ermittlung eines Betankungsvorgangs Tankfüllstandsgeber nicht erforderlich sind und damit auch die gesetzesrelevante Diagnose dieser Tankfüllstandgeber vermieden werden kann. Das Verfahren kommt zu dem ohne zusätzliche Hardware aus und kann einfach und kostengünstig als Programm im Motor-Steuergerät 110 implementiert werden. Insbesondere hat das Verfahren keinerlei Einfluß auf die Laufruhe und die Abgasemission, da die Regenerierung des Adsorptionsfilters 150 ohnehin von Zeit zu Zeit bei einer derartigen Brennkraftmaschine vorgenommen wird. Darüber hinaus hat das Verfahren auch keinen Einfluß auf den Ablauf anderer Diagnosefunktionen.

Es versteht sich, dass das Verfahren alternativ auch zur Verbesserung der Diagnose eines vorhandenen Füllstandsgebers oder beispielsweise zu dessen Überprüfung benutzt werden kann.

Das vorbeschriebene Verfahren kann auch während einer Dichtheitsprüfung des Tanks eingesetzt werden. Zwar ist während einer Dichtheitsprüfung, bei der Lecks der Tankanlage mit einem Durchmesser größer oder gleich 0,5mm durch Einbringen eines Über- oder Unterdrucks in die Tankanlage ermittelt werden sollen, nicht auszuschließen, dass der Tank bereits geöffnet ist, da ein Betankungsvorgang unmittelbar eingeleitet werden soll. In diesem Falle wird ein erkanntes Leck als Fehlerverdacht betrachtet und im weiteren Verlauf der Fahrt geprüft, ob eine Betankung vorlag. Falls dies der Fall ist, wird das Ergebnis verworfen. Falls dies jedoch nicht der Fall ist, wird nach einer vorgebbaren applizierbaren Strecke oder Zeit auf ein Leck geschlossen und ein Fehler in einen Fehlerspeicher eingetragen.

## Patentansprüche

1. Verfahren zum Betrieb einer einen Tank (100) aufweisenden Tankanlage insbesondere eines Kraftfahrzeuges, welche ein Adsorptionsfilter (150) zur Aufnahme von aus dem Tank (100) austretenden flüchtigen Stoffen aufweist, **dadurch gekennzeichnet, daß** aufgrund der Beladung des Adsorptionsfilters (150) auf einen Betankungsvorgang geschlossen wird.

2. Verfahren nach Anspruch 1, **dadurch gekennzeichnet, daß** die Beladung durch Spülen und Adaptieren der Beladung während jeder Fahrt des Fahrzeuges bestimmt wird.

3. Verfahren nach Anspruch 1 oder 2, **dadurch gekennzeichnet, daß** auf einen Betankungsvorgang geschlossen wird, wenn die Beladung während einer Fahrt nach einem Stillstand des Fahrzeugs um einen vorgebbaren Wert größer ist als die Beladung während einer Fahrt vor dem Stillstand des Fahrzeugs.

4. Verfahren nach einem der vorstehenden Ansprüche, **dadurch gekennzeichnet, daß** zur Bestimmung der Beladung den Betriebszustand der Brennkraftmaschine des Kraftfahrzeugs charakterisierende Größen und/oder die Umgebungseinflüsse charakterisierende Größen berücksichtigt werden.

5. Verfahren nach Anspruch 4, **dadurch gekennzeichnet, daß** die dem Betriebszustand charakterisierenden eine oder mehrere der folgenden Größen sind: Drehzahl, Kraftstoff-/Luftverhältnis.

6. Verfahren nach Anspruch 4, **dadurch gekennzeichnet, daß** die die Umgebungseinflüsse charakterisierenden Größen eine oder mehrere der folgenden Größen sind: Höhe über Normalnull, Temperatur, Luftfeuchtigkeit, Luftdruck.

7. Tankanlage insbesondere eines Kraftfahrzeuges, aufweisend einen Tank (100), einen Adsorptionsfilter (150) zur Aufnahme von aus dem Tank (100) austretenden flüchtigen Stoffen, **gekennzeichnet durch** ein Steuergerät (110) zur Erfassung von Signalen, welche die Beladung des Adsorptionsfilters (150) charakterisieren und zur Bestimmung eines Betankungsvorgangs hieraus gemäß dem Verfahren nach einem der vorhergehenden Ansprüche.

## Claims

1. Method for operating a tank system, which has a tank (100), in particular of a motor vehicle, which tank system has an adsorption filter (150) for absorbing volatile substances which emerge out of the tank (100), **characterized in that** a tank filling operation is inferred on the basis of the loading of the adsorption filter (150).

2. Method according to Claim 1, **characterized in that** the loading is determined by flushing and adapting the loading during every journey of the vehicle.

3. Method according to Claim 1 or 2, **characterized in that** a tank filling process is inferred if the loading during a journey after a period of standstill of the vehicle is greater by a predefinable value than the loading during a journey before the period of standstill of the vehicle.

4. Method according to one of the preceding claims, **characterized in that** variables which characterize the operating state of the internal combustion engine of the motor vehicle and/or variables which characterize the environmental influences are taken into consideration for the determination of the loading.

5. Method according to Claim 4, **characterized in that** the variables which characterize the operating state are one or more of the following variables: rotational speed, fuel/air ratio.

6. Method according to Claim 4, **characterized in that** the variables which characterize the environmental influences are one or more of the following variables: height above mean sea level, temperature, air humidity, air pressure.

7. Tank system in particular of a motor vehicle, having a tank (100) and having an adsorption filter (150) for absorbing volatile substances which emerge out of the tank (100), **characterized by** a control unit (110) for receiving signals which characterize the loading of the adsorption filter (150) and for determining a tank filling operation from said signals by means of the method according to one of the preceding claims.

## Revendications

1. Procédé pour faire fonctionner une installation de réservoir présentant un réservoir (100), en particulier d'un véhicule automobile, qui présente un filtre d'adsorption (150) pour recevoir des substances volatiles sortant du réservoir (100), **caractérisé en ce que** sur la base de la charge du filtre d'adsorption (150), on en déduit une opération de remplissage.

2. Procédé selon la revendication 1, **caractérisé en ce que** la charge est déterminée par rinçage et adaptation de la charge à chaque conduite du véhicule.

3. Procédé selon la revendication 1 ou 2, **caractérisé en ce que** l'on déduit une opération de remplissage lorsque la charge pendant la conduite après un arrêt du véhicule est plus importante, d'une valeur prédéfinissable, que la charge pendant une conduite avant l'arrêt du véhicule.

4. Procédé selon l'une quelconque des revendications précédentes, **caractérisé en ce que** pour déterminer la charge, on tient compte de valeurs caractéristiques de l'état de fonctionnement du moteur à combustion interne du véhicule automobile et/ou de valeurs caractéristiques des influences de l'environnement.

5. Procédé selon la revendication 4, **caractérisé en ce que** les valeurs caractéristiques de l'état de fonctionnement sont une ou plusieurs des valeurs suivantes : le régime et le rapport air/carburant.

6. Procédé selon la revendication 4, **caractérisé en ce que** les valeurs caractéristiques de l'état de fonctionnement sont une ou plusieurs des valeurs suivantes : hauteur au-dessus du point zéro normal, température, humidité de l'air, pression de l'air.

7. Installation de réservoir, en particulier d'un véhicule automobile, comprenant un réservoir (100), un filtre d'adsorption (150) pour recevoir des substances volatiles sortant du réservoir (100), **caractérisée par** un appareil de commande (110) pour détecter des signaux qui caractérisent la charge du filtre d'adsorption (150) et pour déterminer une opération de remplissage, selon le procédé selon l'une quelconque des revendications précédentes.
